# EUROPÄISCHE PATENTANMELDUNG

(11) **EP 1 672 181 A1**
(43) Veröffentlichungstag der Anmeldung: **21.06.2006**
(21) Anmeldenummer: 04029585.9
(22) Anmeldetag: 14.12.2004
(51) Int. Cl.: F01D 25/24, F02C 6/12, F01D 25/26

(54) **Turbolader mit mehrteiligem Lagergehäuse**

(71) Anmelder: BorgWarner Inc., Auburn Hills, MI 48326-2872 (US)
(72) Erfinder: Koch, Sylvio, 34414 Warburg (DE); Jennes, Jörg, 67278 Bockenheim (DE)
(74) Vertreter: Schmitz, Hans-Werner

(57) **Zusammenfassung**

Turbolader (1) mit einem Turbinengehäuse (2) für ein Turbinenrad (3), mit einem Verdichtergehäuse (4) für ein Verdichterrad (5), und mit einem zwischen dem Turbinengehäuse (2) und dem Verdichtergehäuse (4) angeordneten Lagergehäuse (6) für die Lagerung einer Läuferwelle (12), wobei das Lagergehäuse (6) aus zumindest zwei zusammensetzbaren Einzelkomponenten (7, 8) aufgebaut ist.

## Beschreibung

Die Erfindung betrifft einen Turbolader gemäß dem Oberbegriff des Anspruches 1.

Ein derartiger Turbolader ist aus der EP 1 420 252 A2 bekannt. Bei diesem wie auch sonstigen bekannten Abgasturboladern wird ein einteilig gegossenes Lagergehäuse verwendet. Durch die fortschreitende Abgasturbolader-Entwicklung kommt es jedoch zu immer größeren Einschränkungen bei der Konstruktion und der Produktion. So ist es bei den bisherigen Konstruktionen aus gießtechnischen Gründen nicht möglich, den Abstand zwischen dem Turbinenrad und der turbinenseitigen Lagerstelle weiter zu verkleinern. Desweiteren ist es unmöglich oder zumindest schwierig, Konstruktionselemente in das Lagergehäuse einzubringen, um eine Abschirmwirkung für das aus den Lagerstellen austretende Öl zu erreichen.

Es ist daher Aufgabe der vorliegenden Erfindung, einen Turbolader der im Oberbegriff des Anspruches 1 angegebenen Art zu schaffen, dessen Aufbau flexibler ist und der es insbesondere möglich macht, in das Lagergehäuse weitere Konstruktionskomponenten einzubringen.

Die Lösung dieser Aufgabe erfolgt durch die Merkmale des Anspruchs 1.

Durch die Aufteilung des Lagergehäuses in mehrere Bauteile wird zunächst eine vereinfachte Herstellung und Bearbeitung der einzelnen Komponenten ermöglicht.

Ferner wird die Engstelle zwischen dem turbinenseitigen Lager und der Kolbenringlauffläche beseitigt. Dieser Hohlraum wird bei einem einteilig gegossenen Gehäuse durch einen Kern gebildet. Dieser muss aber, um eine bestimmte Festigkeit zu erreichen, eine bestimmte Dicke aufweisen. Da der Formsand eine definierte Körnung aufweist, gelangt man jedoch sehr schnell an die technischen Grenzen. Dies hat auch zur Folge, dass die Ausschussquote rapide ansteigt. Gleichzeitig erhöhen sich die Produktionskosten. Ferner wird der Wärmefluss zu den Lagerstellen des Läufers reduziert und die Temperaturbelastung des Motorenöls gesenkt. Diese Nachteile werden mit dem erfindungsgemäßen Turbolader auf einfache und effiziente Art und Weise gelöst.

Durch den Aufbau des Lagergehäuses aus zumindest zwei Einzelkomponenten wird ferner ein größerer Spielraum für zukünftige Entwicklungen gegeben. Denn es ist sowohl möglich, den turbinenseitigen als auch den verdichterseitigen Überhang der Laufräder zu den Lagerstellen zu verringern. Außerdem kann die innere Kontur des Hitzeschildes (8) einfach angepasst und der Spalt zwischen Turbinenradrücken und Hitzeschild reduziert werden.

Durch die einfache Herstellung und Bearbeitung der Teile wird ferner eine erhebliche Kostensenkung erreicht.

Darüber hinaus wird es möglich gemacht, weitere Komponenten in das Lagergehäuse zu integrieren. Dies können beispielsweise ein innerer Hitzeschild und zumindest ein, vorzugsweise jedoch zwei Ölhobel sein. Diese ermöglichen eine Reduktion des durch die Läuferwelle versprühten Öles und damit eine Reduzierung der Leckage über die Kolbenringabdichtung. Desweiteren können Dichtsysteme (z.B. Labyrinthdichtungen, Bürstendichtungen) sowohl verdichterseitig als auch turbinenseitig in das Lagergehäuse integriert werden.

Das erfindungsgemäße Lagergehäuse kann somit sowohl an Standard-Turboladern als auch an Turboladern mit variabler Turbinengeometrie (VTG-Türbolader) angepasst werden. Dies bedeutet, dass der grundsätzliche Aufbau des jeweiligen Turboladers mit Lagergehäuse, Läufer, Verdichtergehäuse, Verdichterrad und Turbinengehäuse erhalten bleibt.

Ferner ergibt sich die Möglichkeit, das Lagergehäuse mit einem Kühlmantel zu versehen oder es ohne eine zusätzliche Kühlung einzusetzen.

Die Unteransprüche haben vorteilhafte Weiterbildungen der Erfindung zum Inhalt.

In Anspruch 12 ist ein erfindungsgemäßes Lagergehäuse als selbstständig handelbares Objekt definiert.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: einen Längsschnitt durch einen erfindungsgemäßen Turbolader,
- Fig. 2: eine Schnittdarstellung eines Teils des Lagergehäuses mit der Läuferwelle des Turboladers und zwei Ölhobeln gemäß Fig. 1 in vergrößertem Maßstab,

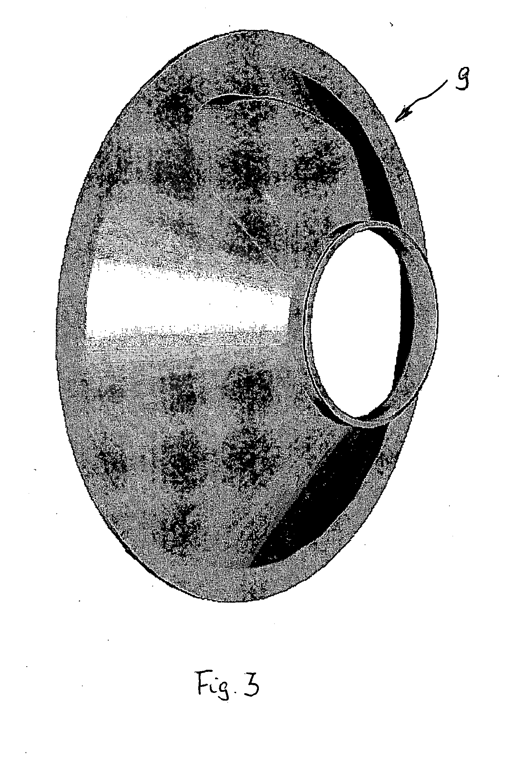

- Fig. 3: eine perspektivische Darstellung eines inneren Hitzeschildes,
- Fig. 4: eine perspektivische Darstellung eines Ölhobels, und
- Fig. 5: eine Darstellung zur Erläuterung der Befestigung des Ölhobels gemäß Fig. 4 im Lagergehäuse.

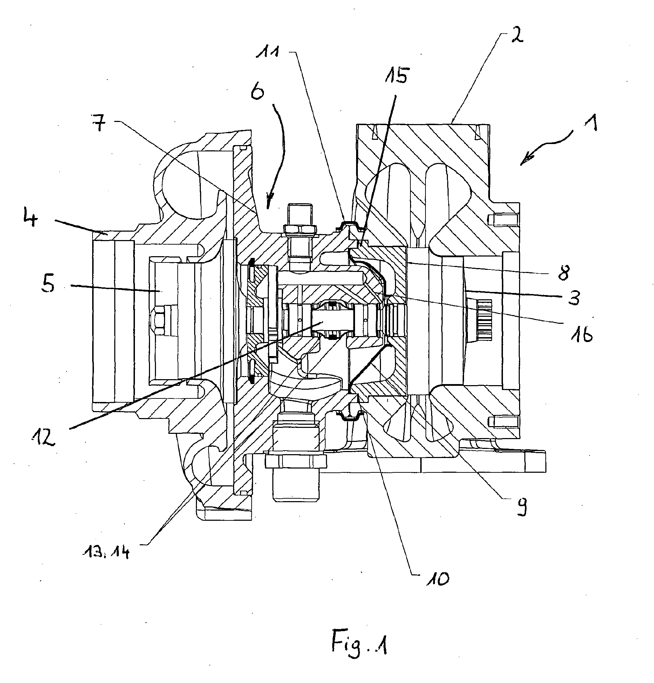

In Fig. 1 ist ein erfindungsgemäßer Turbolader (Abgasturbolader) 1 dargestellt, der mit einem Turbinengehäuse 2 für ein Turbinenrad 3 versehen ist.

Ferner ist ein Verdichtergehäuse 4 für ein Verdichterrad 5 und ein Lagergehäuse 6 vorgesehen, das zwischen dem Turbinengehäuse 2 und dem Verdichtergehäuse 4 angeordnet ist. Das Lagergehäuse 6 weist eine Lagerung für die Läuferwelle 12 auf, auf der sowohl das Turbinenrad 3 als auch das Verdichterrad 5 angeordnet sind. Dieser prinzipielle Aufbau entspricht sowohl Standard-Turboladern als auch VTG-Abgasturboladern.

Erfindungsgemäß ist jedoch das Lagergehäuse 6 des Turboladers 1 aus zumindest zwei zusammensetzbaren Einzelkomponenten 7 und 8 aufgebaut. Bei der in Fig. 1 dargestellten besonders bevorzugten Ausführungsform ist die Einzelkomponente 7 als verdichterseitiges Gehäusehauptteil aufgebaut, das mit dem Verdichtergehäuse 4 verbindbar ist. Die zweite Einzelkomponente 8 ist als turbinenseitiger äußerer Hitzeschild ausgebildet, der bei der dargestellten Ausführungsform indirekt mit der ersten Einzelkomponente 7 über eine Befestigungseinrichtung 11 verbunden ist. Hierzu weist der Hitzeschild 8 einen radial nach außen vorspringenden Befestigungsbund 15 auf, der im Montagezustand vom Lagergehäuse 6 und dem Turbinengehäuse 2 verklemmt wird. Wie Fig. 1 verdeutlicht, ist die Befestigungseinrichtung 11 im Beispielsfalle als Spannbandanordnung ausgebildet, die das Turbinengehäuse 2 an dem Gehäusehauptteil 7 des Lagergehäuses 6 festlegt. Anstelle des Spannbandes ist auch eine Segmentverschraubung möglich.

Wie Fig. 1 ferner verdeutlicht, ist zwischen dem äußeren Hitzeschild 8 und dem Gehäusehauptteil eine Dichtung 10 angeordnet.

Durch die geteilte Ausführung des Lagergehäuses 6 ist es möglich, ferner einen inneren Hitzeschild 9 vorzusehen, der als Abschirmung für das Motoröl von den heißen Teilen des Turboladers 1 und gleichzeitig als Ölablauf dient. Der innere Hitzeschild 9 wird im Lagergehäuse 6 fixiert, z.B. durch Verklemmung oder Verschraubung.

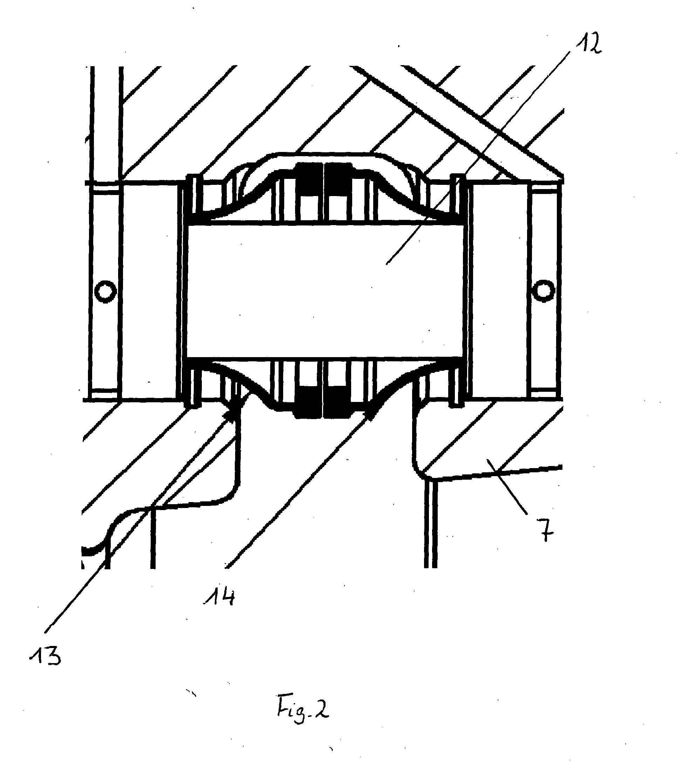

Ferner ist es erfindungsgemäß möglich, zumindest einen Ölhobel, jedoch bei der in Fig. 2 dargestellten besonders bevorzugten Ausführungsform zwei Ölhobel 13 und 14 im Lagergehäuse 6 zu integrieren, die verhindern, dass das aus den Lagerbuchsen austretende Öl durch die Läuferwelle 12 versprüht wird.

Aus der vergrößerten Darstellung der Fig. 2 wird hierbei deutlich, dass die Ölhobel 13 und 14 um die Läuferwelle 12 herum angeordnet sind und zwischen dieser und dem Gehäusehauptteil 7 vorgesehen sind.

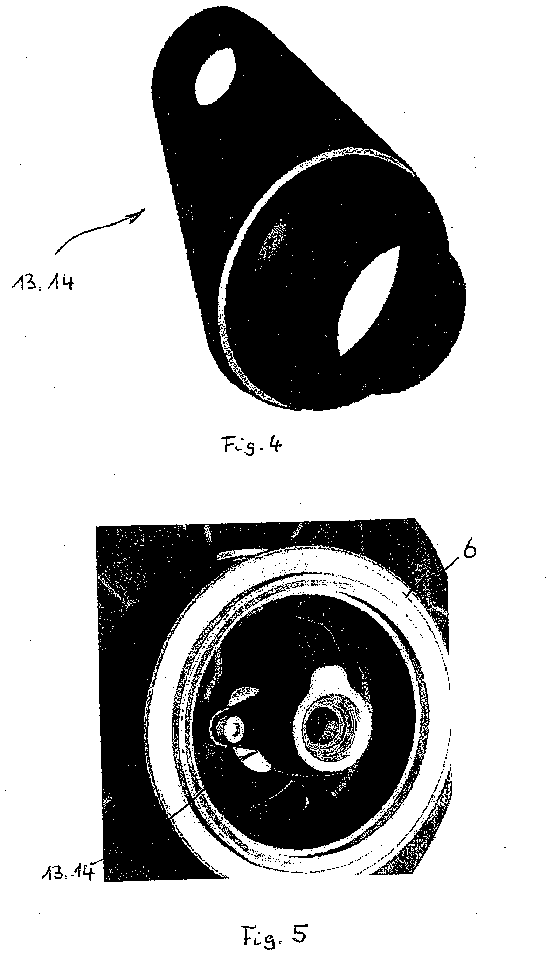

Einer der Ölhobel ist in perspektivischer Darstellung in Fig. 4 verdeutlicht, auf die hiermit explizit Bezug genommen wird. Die Ölhobel 13 und 14 können im Lagergehäuse 6 verschraubt oder verklemmt werden, was sich aus Fig. 5 beispielhaft ergibt.

Ferner ist es möglich, das Lagergehäuse 6 sowohl mit als auch ohne eine Spritzölbohrung auszuführen. Bei der in Fig. 1 dargestellten besonders bevorzugten Ausführungsform ist eine derartige Spritzölbohrung 16 vorgesehen, zu deren Anordnung im Lagergehäuse 6 hiermit explizit auf die Darstellung der Fig. 1 Bezug genommen wird.

### Bezugszeichenliste

- 1: Turbolader
- 2: Turbinengehäuse
- 3: Turbinenrad
- 4: Verdichtergehäuse
- 5: Verdichterrad
- 6: Lagergehäuse
- 7, 8: Einzelkomponenten (Gehäusehauptteil bzw. äußerer Hitzeschild
- 9: Innerer Hitzeschild
- 10: Dichtung
- 11: Befestigungseinrichtung (Spannbandanordnung)
- 12: Läuferwelle
- 13, 14: Ölhobel
- 15: Befestigungsbund
- 16: Spritzölbohrung

## Patentansprüche

1. Turbolader (1)
- mit einem Turbinengehäuse (2) für ein Turbinenrad (3),
- mit einem Verdichtergehäuse (4) für ein Verdichterrad (5), und
- mit einem zwischen dem Turbinengehäuse (2) und dem Verdichtergehäuse (4) angeordneten Lagergehäuse (6) für die Lagerung einer Läuferwelle (12),
**dadurch gekennzeichnet,**
- **dass** das Lagergehäuse (6) aus zumindest zwei zusammensetzbaren Einzelkomponenten (7, 8) aufgebaut ist.

2. Turbolader nach Anspruch 1, **dadurch gekennzeichnet, dass** das Lagergehäuse (6) mittels einer, vorzugsweise lösbaren, Befestigungseinrichtung (9) am Turbinengehäuse (2) fixierbar ist.

3. Turbolader nach Anspruch 2, **dadurch gekennzeichnet, dass** die Befestigungseinrichtung (9) als Spannbandanordnung oder Segmentverschraubung ausgebildet ist.

4. Turbolader nach einem der Ansprüche 1 bis 3, **dadurch gekennzeichnet, dass** eine (7) der Einzelkomponenten (7, 8) als verdichterseitiges Gehäusehauptteil und die andere (8) der Einzelkomponenten (7, 8) als turbinenseitiger äußerer Hitzeschild ausgebildet ist.

5. Turbolader nach Anspruch 4, **dadurch gekennzeichnet, dass** der äußere Hitzeschild (8) indirekt über das Turbinengehäuse (2) am Gehäusehauptteil (7) fixierbar ist.

6. Turbolader nach Anspruch 4 oder 5, **dadurch gekennzeichnet, dass** zwischen dem Gehäusehauptteil (7) und dem äußeren Hitzeschild (8) ein innerer Hitzeschild (9) angeordnet ist.

7. Turbolader nach einem der Ansprüche 4 bis 6, **dadurch gekennzeichnet, dass** zwischen dem äußeren Hitzeschild (8) und dem Gehäusehauptteil (7) eine Dichtung (10) angeordnet ist.

8. Turbolader nach einem der Ansprüche 1 bis 7, **dadurch gekennzeichnet, dass** zwischen der Läuferwelle (12) und dem Gehäusehauptteil (7) zumindest ein Ölhobel (13, 14) angeordnet ist.

9. Turbolader nach Anspruch 8, **dadurch gekennzeichnet, dass** der Ölhobel (13, 14) im Gehäusehauptteil (7) verschraubt oder verklemmt ist.

10. Turbolader nach einem der Ansprüche 1 bis 9, **dadurch gekennzeichnet, dass** das Lagergehäuse (6) mit oder ohne Kühlmantel ausgebildet ist.

11. Turbolader nach einem der Ansprüche 1 bis 10, **dadurch gekennzeichnet, dass** das Lagergehäuse (6) mit oder ohne Spritzölbohrung (15) ausgebildet ist.

12. Lagergehäuse (6) für einen Turbolader (1) nach dem Oberbegriff des Anspruches 1, **gekennzeichnet durch** zumindest eines der Merkmale der Ansprüche 2 bis 11.
